# FASCICULE DE BREVET EUROPEEN

(11) **EP 0 597 253 B1**
(45) Date de publication et mention de la délivrance du brevet: **16.07.1997**
(21) Numéro de dépôt: 93116271.3
(22) Date de dépôt: 07.10.1993
(51) Int. Cl.: A01D 46/00

(54) **Effeuilleuse automatique viticole**
Automatische Entblätterungsmaschine
Automatic machine for cutting vineyard leaves

(30) Priorité: 17.09.1993 CH 2793/93
(43) Date de publication de la demande: 18.05.1994
(73) Titulaire: AVIDOR S.A., CH-1027 Lonay (CH)
(72) Inventeur: Cauderay, Jean-Pierre, CH-1163 Etoy (CH)

(56) Documents cités:
- EP-A- 0 278 607
- DE-U- 8 619 756
- FR-A- 2 390 084
- FR-A- 2 483 168

## Description

FR-A-2 483 168 révèle une machine d'effeuillage de la vigne. La machine comporte un capotage équipé d'une ouverture d'entrée et d'une ouverture de sortie. L'ouverture d'entrée est protégée par des tringles longitudinales. Entre les deux ouvertures s'étend une boucle constituée par un tamis souple à l'intérieur de laquelle est disposé un ventilateur. L'ouverture d'entrée est équipée d'un outil de coupe en forme d'une pluralité de lames rotatives. Le ventilateur crée un courant d'aspiration qui aspire des feuilles qui sont coupées par les lames. Les morceaux de feuilles viennent s'appliquer contre le tamis qui se déplace afin d'évacuer les feuilles coupées, hors du capotage.

FR-A-2 390 084 révèle une effeuilleuse mécanique comprenant au moins une turbine d'aspiration se composant d'une hélice avec des pales acérées, la turbine étant supportée par un bras pivotant. L'hélice se trouve derrière une grille protectrice et l'effet d'aspiration provoque le plaquage automatique de la turbine contre la vigne.

L'effeuilleuse selon la présente invention comprend les caractéristiques contenues dans la revendication.

C'est une machine servant à enlever automatiquement les feuilles dans la zone des grappes et ceci sans blesser le raisin.

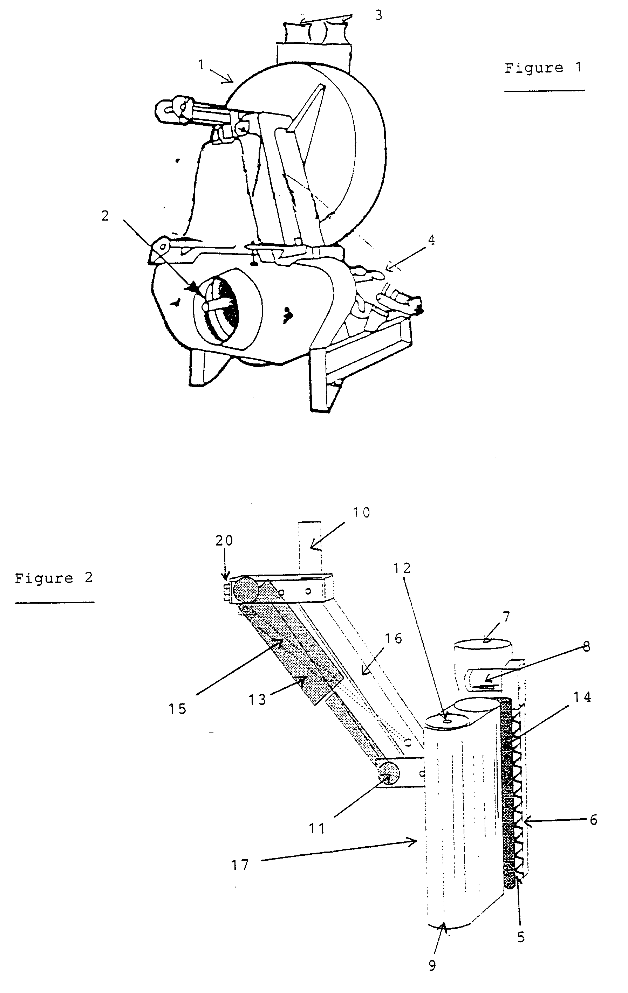

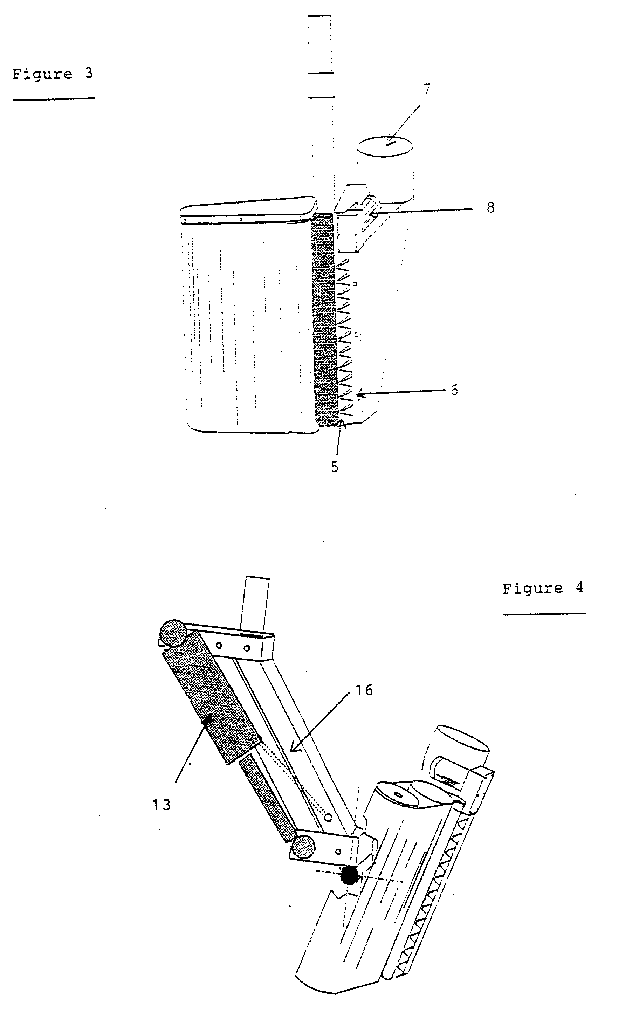

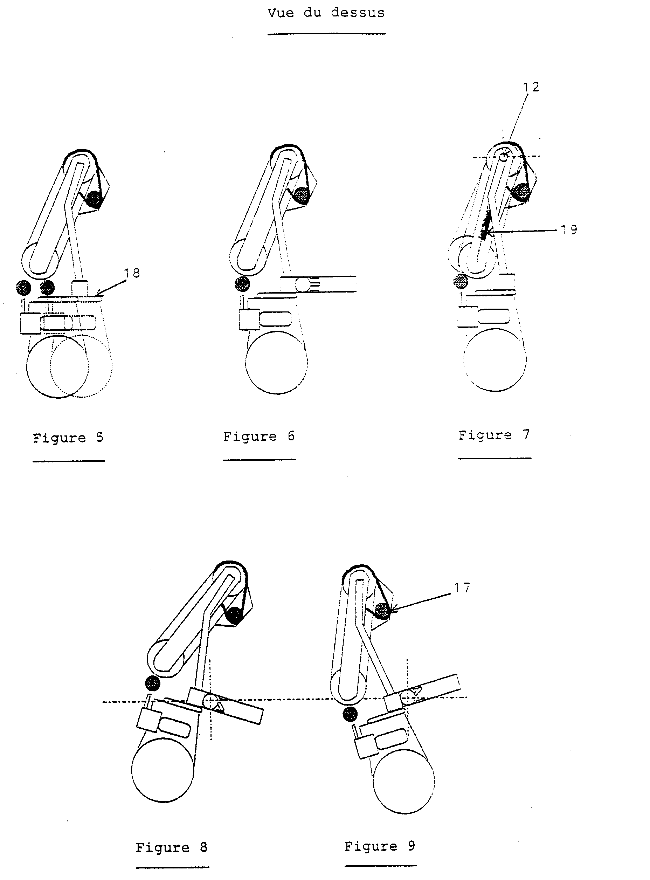

Dans une mode d'execution préférée, elle est constituée des éléments suivants :
- une turbine puissante, entraînée par prise de force 2, crée une forte dépression pour l'aspiration des feuilles 1.
- deux têtes d'aspiration 3 reliées par un tuyau sont disposées à des emplacements bien définis selon les vignes.
- un couteau alternatif 6 est placé à l'intérieur de chaque tête afin de couper les feuilles aspirées. Il est entraîné par un moteur hydraulique 8.
- un rouleau 14 sur lequel sont fixés des contacteurs électriques s'appuie sur la végétation et transmet en permanence la position de la tête à une centrale électro-hydraulique.
- un tapis roulant 9, fixé sur la tête, entraîné par un moteur hydraulique 17 derrière le tapis dans la fig. 2 syncronisé à l'avancement du tracteur, a pour rôle d'éviter les éventuels frottements sur la vigne.
- une centrale électro-hydraulique assure par l'intermédiaire de verins (à gaz 15, pointillés dans la fig. 2, hydrauliques 13) la position des têtes par l'impulsion des rouleaux.

## Revendications

1. Machine entièrement automatique permettant d'enlever les feuilles dans la zone des grappes sans abîmer le raisin, équipée de deux têtes d'effeuillage à commande électro-hydraulique ou pneumatique qui s'adaptent automatiquement à la végétation par l'intermédiaire d'un tapis roulant (9) entrainé par un moteur hydraulique (17) ou électrique apte à être synchronisé avec l'avancement de la machine, les têtes étant montées sur double ou triple articulation (10,11,12) avec amortisseurs à gaz (19), pneumatiques ou hydrauliques (13) afin d'épouser toutes les aspérités de la vigne et ceci avec une grande douceur, une turbine (1) entrainée par prise de force ou par moteurs afin de créer une forte dépression à l'intérieur de bouches d'aspiration linéaires (5), équipées de couteaux alternatifs (6) entraînés par moteurs hydrauliques (8), ce qui a pour effet d'aspirer les feuilles et de les couper alors que les grappes sont écartées par un rouleau (14) à l'avant de l'aspiration, les têtes étant suspendues par le moyen d'un parallélogramme (16) équipé d'un vérin à gaz (15), pneumatique ou hydraulique avec réglage continu de pression et un réglage continu de la profondeur de la coupe (18) sur glissières permettant de sélectionner le pourcentage de feuille à enlever.

## Claims

1. Automatic Leaf Removal System for viticulture without shocking the grapes. The system consists two automatically guided heads, which are fitted with a conveyor belt (9) driven by a hydraulic motor (17). The belt is synchronised to the tractor speed. The heads follow gently the grape vines regardless the irregularities. The heads are guided by parallel arms which consists of a double or triple hinge (10, 11, 12) and are fitted with gas shocks which control the movement of the head along the canopy. The turbine (1) is driven by the PTO of the tractor, this produces the necessary vacuum to pull the leaves inside the leaf removal heads (5). The head consists of a drum which follows along the trellis and knives (6) which are driven by a hydraulic motor (8). Due to the fact of the vacuum the leaves are pulled in the heads and cutted immediately but the grape bunches are guided by the drum (14) gently over the knives so that no shocking or rubbing occurs to the fruit. The heads are installed on parallel arms (16). Due to Gas shocks (15) the pressure of the heads and the desired level of leaf removal (knives) (18) can be adjusted.

## Patentansprüche

1. Automatische Maschine zur Entlaubung der Reben ohne die Trauben zu verletzen. Sie ist mit zwei Entlaubungsköpfen ausgestattet, die sich mittels einer elektro-hydraulischen resp. pneumatischen Steuerung automatisch den Unregelmässigkeiten der Rebe mittels eines hydraulisch-resp. elektrisch angetriebenen Rollband (9), das mittels eines Hydraulikmotors (17) angetrieben wird, anpasst. Das Rollband läuft synchron zur Vorwärtsbewegung des Traktors. Die Köpfe sind auf einer doppelten respektiv dreifachen Gelenkverbindung (10,11,12) montiert und mit Hydraulischen-, Pneumatischen- oder Gasstossdämpfern versehen. Dies sichert die genaue Abtastung der Unebenheiten der Rebe. Die Turbine (1) wird anhand der Zapfwelle des Traktors angetrieben. Somit entsteht ein Unterdruck in den Entlaubungsköpfen (5). Die Köpfe sind zusätzlich mit Schermessern (6) ausgestattet, die durch einen Hydraulikmotor (8) angetrieben werden. Durch den Unterdruck werden die Blätter eingesogen und unmittelbar von der Rebe abgetrennt. Die Trauben jedoch werden mittels einer Rolle (14) sorgfälltig über die Messer gehoben, so dass weder Beschädigungen noch eine Verletzungen auftreten. Die Köpfe sind auf einer Parallelogramm-Vorrichtung (16) montiert. Dank Gas- (15), Pneumatisch- und Hydraulikzylindern lässt sich der Anliegedruck sowie die Intensität der Schwermesser (18) resp. der Entlaubungsgrad regulieren.
